# EUROPEAN PATENT APPLICATION

(11) **EP 4 787 962 A1**
(43) Date of publication of application: **05.08.2026**
(21) Application number: 24872895.8
(22) Date of filing: 25.09.2024
(51) Int. Cl.: H04W 36/02, H04W 36/08, H04W 36/00, H04W 28/06, H04L 47/32, H04W 88/04

(54) **LOSSLESS DATA COMMUNICATION METHOD**

(30) Priority: 27.09.2023 US 202363540662 P
(71) Applicant: LG Electronics Inc., Seoul 07336 (KR)
(72) Inventor: KIM, Seokjung, Seoul 06772 (KR); BYUN, Daewook, Seoul 06772 (KR); HAN, Jaemin, Seoul 06772 (KR)
(74) Representative: Frenkel, Matthias Alexander
(86) International application number: PCT/KR2024/014468
(87) International publication number: WO 2025/071187

(57) **Abstract**

One disclosure of the present disclosure provides a method by which a CU-UP performs communication. The method comprises the steps of: receiving a bearer context-related request message from a CU-CP of a source base station, wherein the request message includes an indirect path indication and the indirect path indication indicates that a path between a remote UE and the source base station is an indirect path; transmitting a response message to the CU-CP on the basis of the request message; transmitting downlink data to the remote UE; receiving, from a DU of the source base station, a transmission state message indicating that the downlink data has been successfully transmitted to a relay UE for the remote UE; the CU-UP skipping discarding of the downlink data by the transmission state message on the basis of the indirect path indication and buffering the downlink data on the basis of the indirect path indication; and transmitting the buffered downlink data to a target base station on the basis of handover of the remote UE from the source base station to the target base station.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A method is required to transmit downlink data to the Remote UE without loss when the Remote UE is handed over.

### DESCLOSURE

### TECHNICAL SOLUTION

CU-CP transmits an indirect path indication to CU-UP, and CU-UP buffers downlink data based on this and transmits it to the target base station.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIG. 6 illustrates an example of an overall architecture of an NG-RAN.
FIG. 7 illustrates logical nodes (CU-C, CU-U, and DU) inside a logical gNB/en-gNB.
FIG. 8 illustrates deployment scenarios of a gNB.
FIG. 9 illustrates a flowchart according to an embodiment of the present disclosure.
FIG. 10 shows the procedure of the CU-UP according to disclosure of the present specification.
FIG. 11 shows the procedure of the CU-CP according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

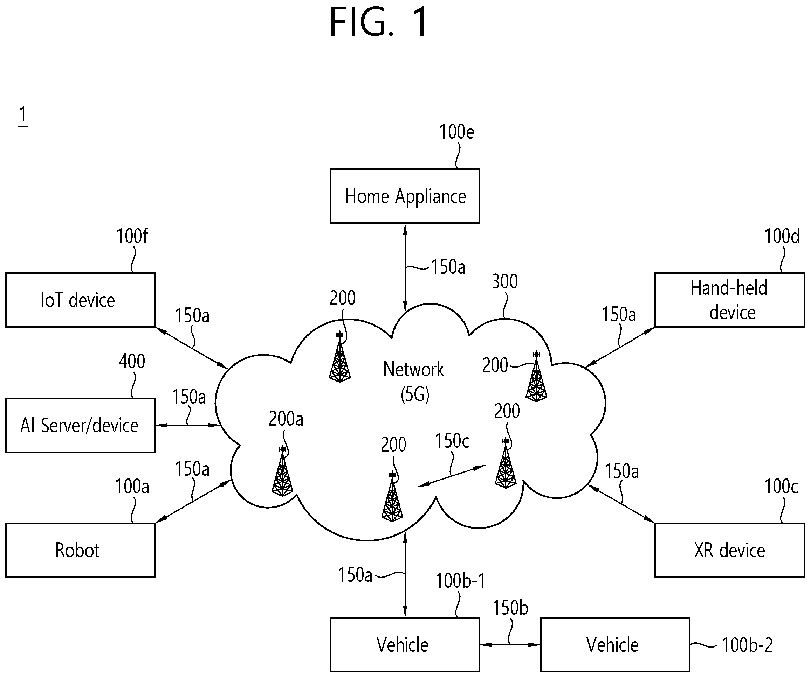

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment.

For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

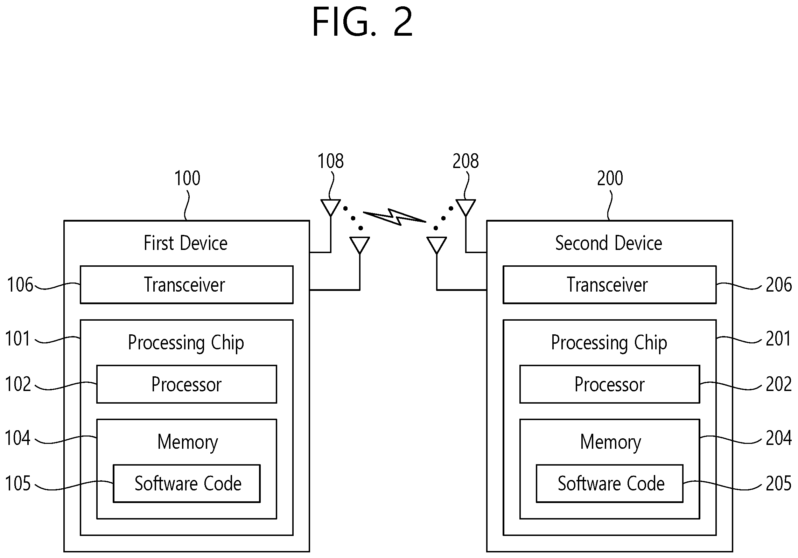

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

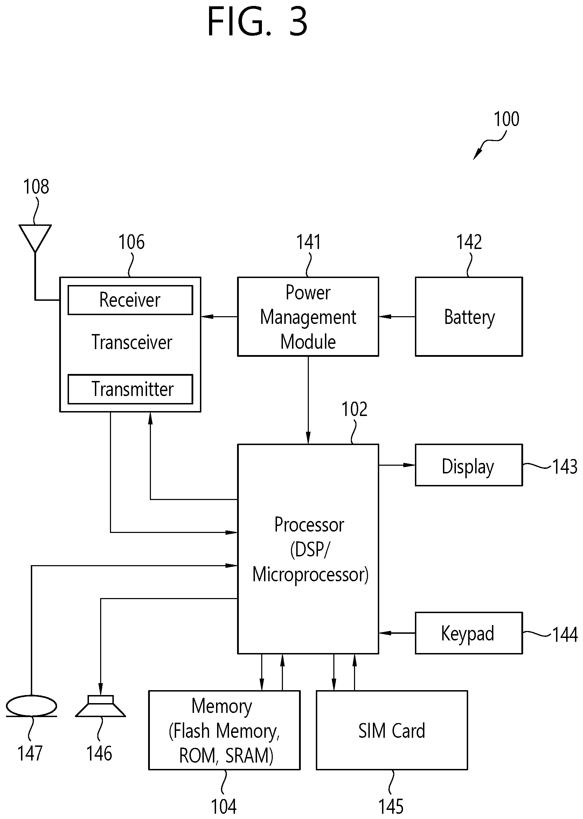

**FIG. 3** **shows an example of UE to which implementations of the present disclosure is applied.**

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

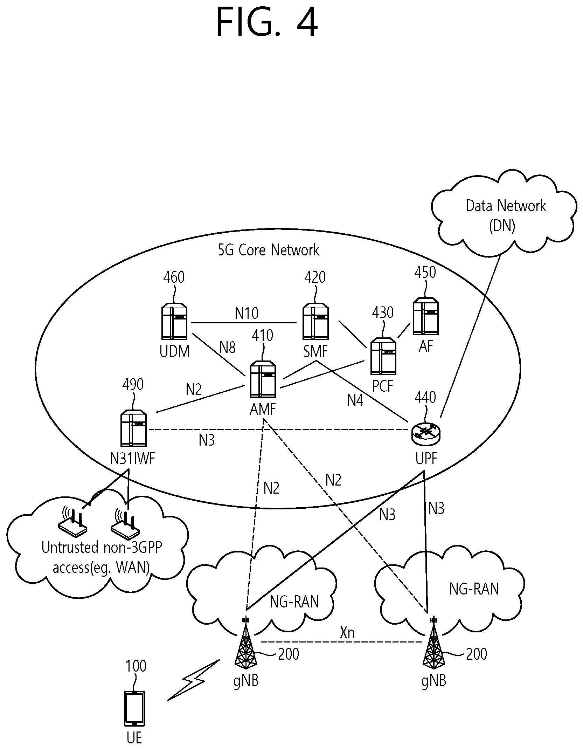

**FIG. 4** **is a block diagram of a next generation cellular network.**

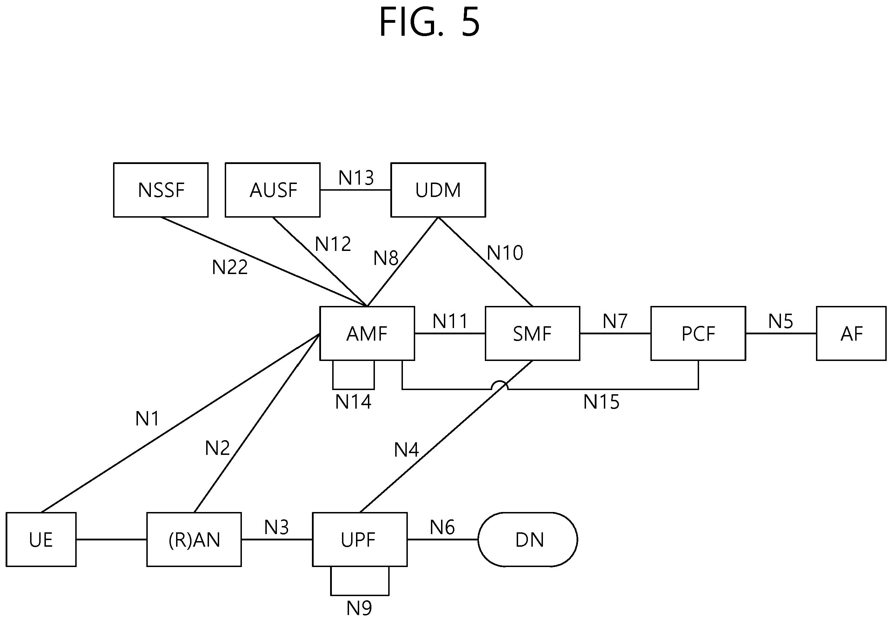

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

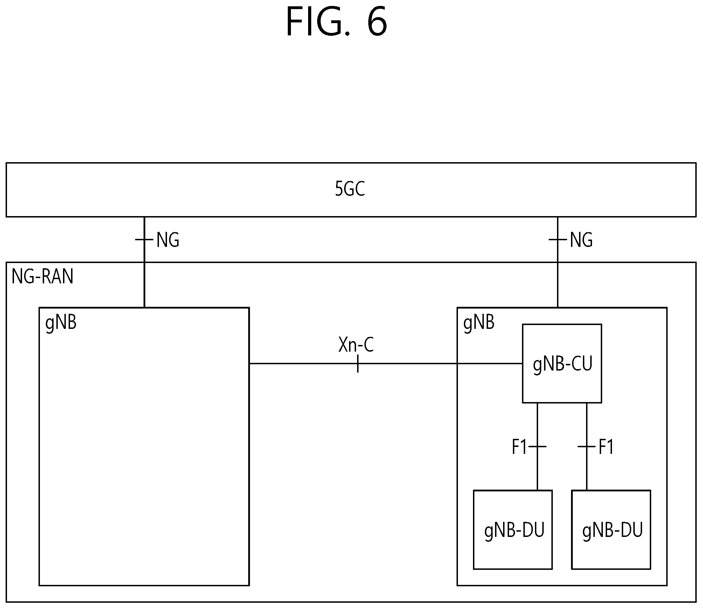

**FIG. 6** **illustrates an example of an overall architecture of an NG-RAN.**

Referring to FIG. 6, a gNB may be composed of a gNB-CU (central unit) and one or more gNB-DUs (distributed units). The gNB-CU is a logical node hosting RRC (radio resource control), SDAP (service data adaptation protocol), and PDCP (packet data convergence protocol) protocols of the gNB or RRC and PDCP protocols of an en-gNB. The gNB-CU controls operations of the one or more gNB-DUs. The gNB-DU is a logical node hosting RLC (radio link control), MAC (media access control), and physical layers of the gNB or the en-gNB. Operations of the gNB-DU are partially controlled by the gNB-CU. One gNB-DU supports one or more cells. One cell is supported only by one gNB-DU.

The gNB-CU and the gNB-DU are connected through an F1 interface. The gNB-CU terminates the F1 interface connected with the gNB-DU. The gNB-DU terminates the F1 interface connected with the gNB-CU. One gNB-DU is connected only to one gNB-CU. However, a gNB-DU may be connected to a plurality of gNB-CUs by appropriate implementation. The F1 interface is a logical interface. In a case of the NG-RAN, NG and Xn-C interfaces for a gNB composed of a gNB-CU and one or more gNB-DUs are terminated at the gNB-CU. In a case of EN-DC, S1-U and X2-C interfaces for a gNB composed of a gNB-CU and one or more gNB-DUs are terminated at the gNB-CU. The gNB-CU and the gNB-DUs connected thereto appear only as a gNB to other gNBs and a 5GC.

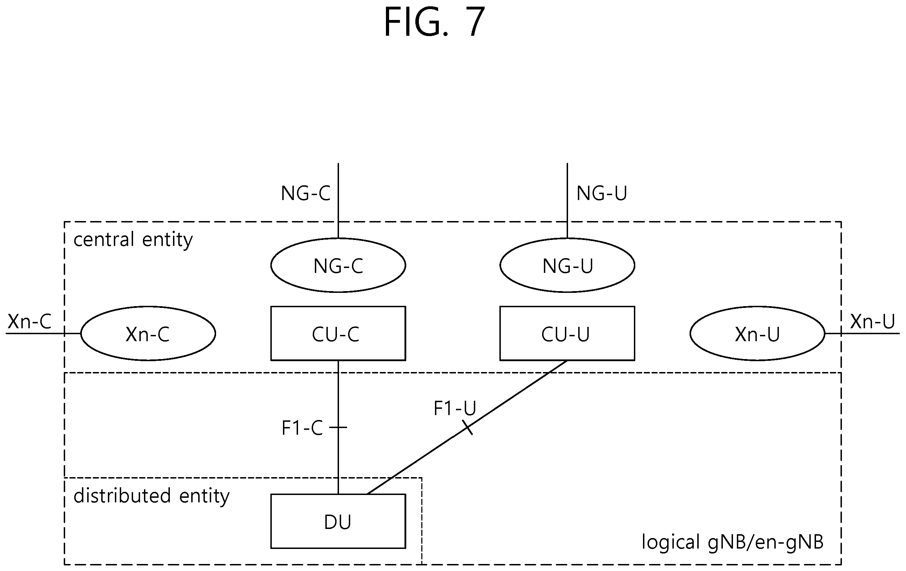

**FIG. 7** **illustrates logical nodes (CU-C, CU-U, and DU) inside a logical gNB/en-gNB.**

FIG. 7 is one of possible deployment scenarios of the NG-RAN shown in FIG. 6. Protocol terminations of NG and Xn interfaces are indicated by ellipses in FIG. 7. A central entity and a distributed entity in FIG. 7 indicate physical network nodes.

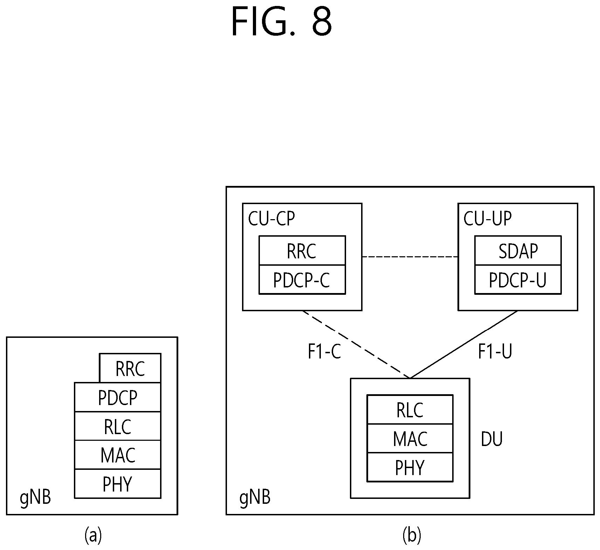

**FIG. 8** **illustrates deployment scenarios of a gNB.**

FIG. 8 illustrates examples of the architecture and possible deployment scenarios of the NG-RAN described in FIGS. 6 and 7.

FIG. 8-(a) illustrates a collapsed gNB deployment scenario. In this deployment scenario, all RAN protocols and functions are at the same location. This deployment scenario corresponds to that used in current LTE. Since this deployment scenario is similar to an LTE architecture, maximum backward compatibility with a deployment scenario of existing LTE is guaranteed.

FIG. 8-(b) illustrates a disaggregated deployment scenario. In this deployment scenario, RAN protocol functions are distributed across different locations such as a CU and a DU. The DU hosts RLC, MAC, and physical layers. A CU-CP hosts RRC and PDCP-C protocols. A CU-UP hosts PDCP-U (and SDAP) protocols. The DU and the CU-CP may be connected through an F1-C interface. The DU and the CU-UP may be connected through an F1-U interface. The CU-CP and the CU-UP may be connected through an E1 interface.

According to the disaggregated deployment scenario described in FIG. 8-(b), locations of different RAN functions may be optimized and deployed based on a scenario and desired performance. For example, the CU-CP may be deployed at a location close to the DU. Alternatively, the CU-CP may be co-deployed with the DU. In such a case, a short latency may be provided for important CP procedures such as connection (re-)establishment, handover, and state transition. On the other hand, the CU-UP may be centralized and deployed in a regional or national data center. Accordingly, the CU-UP is advantageous for cloud implementation and may provide a centralized endpoint of UP traffic in dual connectivity and tight interworking scenarios. In addition, an additional CU-UP may be deployed close to (or at the same location as) the DU to provide a local endpoint of UP traffic for applications requiring very low latency (e.g., ultra-reliable low latency communications (URLLC) traffic).

### <Path Switching related to Relay>

Regarding communication through a relay, path switching includes the following scenarios:
- Switching from an indirect path to a direct path (Inter-gNB indirect-to-direct path switching) (for example, remote UE-relay UE A-gNB X to remote UE-gNB Y)
- Switching from a direct path to an indirect path (Inter-gNB direct-to-indirect path switching) (for example, remote UE-gNB X to remote UE-relay UE A-gNB Y)
- Switching from an indirect path to an indirect path (Intra-gNB indirect-to-indirect path switching) (for example, remote UE-relay UE A-gNB X to remote UE-relay UE B-gNB X)
- Switching from an indirect path to an indirect path (Inter-gNB indirect-to-indirect path switching) (for example, remote UE-relay UE A-gNB X to remote UE-relay UE B-gNB Y)

Conventionally, service continuity may be provided in switching from a direct path to an indirect path (direct-to-indirect path switching) or switching from an indirect path to a direct path (indirect-to-direct path switching) in an intra-gNB situation.

Path switching and switching from an indirect path to an indirect path (indirect-to-indirect path switching) in an inter-gNB situation are problematic.

In an indirect path situation (for example, a situation in which an NG-RAN and a remote UE exchange data through a relay UE), the NG-RAN receives, from an RLC located in the relay UE, whether DL (downlink) data has been properly delivered. Alternatively, in the indirect path situation, the remote UE receives, from an RLC located in the relay UE, whether UL (uplink) data has been properly delivered.

Therefore, in the indirect path situation, the NG-RAN may not know whether the corresponding data has been successfully delivered through a PC5 link (for DL). Alternatively, the remote UE may not know whether the corresponding data has been successfully delivered through a Uu link (for UL).

For example, transmission of DL data transmitted from the NG-RAN may fail in the PC5 link, and the NG-RAN may not know the failure. Alternatively, transmission of UL data transmitted from the remote UE may fail in the Uu link, and the remote UE may not know the failure.

When the NG-RAN (or the remote UE) receives ACK information from the RLC located in the relay UE, the NG-RAN (or the remote UE) may delete the DL (or UL) data packet. In this case, if the DL (or UL) packet fails to be transmitted via the PC5 (or Uu) link, the NG-RAN (or the remote UE) may not retransmit the packet to the remote UE (or the NG-RAN), so that lossless delivery is problematic.

When path switching occurs in an intra-gNB situation, UL/DL lossless delivery may be supported without separate specification support.

In an inter-gNB situation (for example, when a base station is changed), proactive data forwarding has been proposed to support DL lossless delivery.

The proactive data forwarding refers to a scheme in which a source base station (source NG-RAN) continuously buffers a DL data packet successfully transmitted toward a relay UE without deleting it, and then the source base station delivers the buffered DL data to a target base station (target NG-RAN) in a handover process of a remote UE. This scheme may be applied when a base station (gNB) is not divided into a CU-CP, a CU-UP, and a DU.

When the base station (gNB) is divided into a CU-CP, a CU-UP, and a DU, the CU-UP may delete a corresponding DL data packet only based on ACK information sent by an RLC of the relay UE because the CU-UP does not know whether a bearer created/allocated for a current remote UE is transmitted through the relay UE. Then, when the base station is changed, a problem may occur in which DL lossless delivery is not guaranteed.

To solve this problem, the CU-UP needs to know that the current remote UE is accessing through the relay UE. In addition, the CU-UP needs to know that proactive data forwarding should be supported.

According to an embodiment of the present disclosure, the CU-CP may inform the CU-UP that the current remote UE is accessing through the relay UE. Based on this, the CU-UP may buffer a DL data packet successfully transmitted by the DU toward the relay UE without deleting it. When a handover in which the base station is changed is performed later, the CU-UP may transmit the buffered data packet to the target base station.

Then, even if transmission of the DL data packet fails via the PC5 link, the remote UE may receive the packet from the target base station.

A method for a CU-CP to inform a CU-UP that a remote UE has accessed through a relay UE and that proactive data forwarding is required may be proposed.

In the method proposed in the present disclosure, some of service operations between core NFs (network functions) may be used by defining a new service operation. In the operation in the method proposed in the present disclosure, an existing service operation may be used.

In an NG message between an AMF and an NG-RAN in the present disclosure, some may be used by defining a new NG message. In addition, in an RRC message between the NG-RAN and a UE in the present disclosure, some may be used by defining a new RRC message.

In the present disclosure, some steps may be performed simultaneously/in parallel, or may be performed in a reversed order.

Names of an indication or parameter information in the present disclosure are examples and may be interpreted by other names for the proposed procedure/purpose/scheme.

The CU-CP may be a logical node constituting the base station hosting an RRC (radio resource control) protocol and a PDCP (packet data convergence protocol)-C protocol.

The CU-UP may be a logical node constituting the base station hosting a PDCP-U.

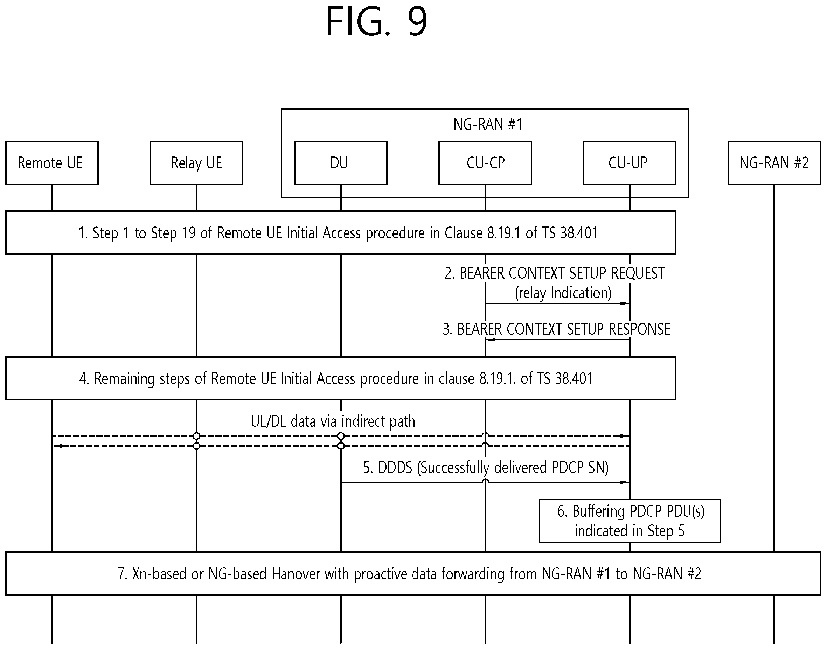

**FIG. 9** **illustrates a flowchart according to an embodiment of the present disclosure.**

In a Bearer Context Setup process (or a Bearer Context Modification procedure or a Bearer Context Modification Required procedure) for a remote UE, a CU-CP may send an indication informing a CU-UP that the remote UE has accessed through a relay UE. Based on this, the CU-UP may continuously buffer DL data successfully transmitted toward the relay UE without deleting it.

Step 1. Steps 1 to 19 of the Remote UE Initial Access procedure of Clause 8.19.1 of TS 38.401 v17.5.0 may be performed.

Step 2. The CU-CP may request the CU-UP to create/allocate a bearer context for the remote UE. At this time, the CU-CP may also transmit an indication informing that the remote UE is accessing through the relay UE to the CU-UP. The indication may be an indirect path indication indicating that a path for the remote UE (a path between the remote UE and the base station) is an indirect path.

The CU-CP may recognize that a connection between the relay UE and the base station is for the remote UE. For example, the CU-CP may recognize that a path to the remote UE is an indirect path. The CU-CP may transmit an indirect path indication informing the CU-UP of the fact.

For DL lossless delivery, even if the CU-UP receives a DDDS (downlink data delivery status) frame including a 'successfully delivered PDCP SN' from the DU, the CU-UP may continuously buffer DL data up to the PDCP SN without deleting it based on the aforementioned indication.

Instead of the CU-CP transmitting the indication informing the CU-UP that the remote UE is accessing through the relay UE, the CU-CP may transmit information (or an instruction) to additionally buffer N_{buffer} DL data packets to the CU-UP. Then, the CU-UP may delete DL data packets up to a PDCP SN obtained by subtracting N_{buffer} from the 'successfully delivered PDCP SN' received from the DU, and may continue to buffer subsequent DL data packets. For example, the CU-UP may additionally buffer N_{buffer} DL data packets.

Alternatively, instead of (or while) the CU-CP transmitting the indication informing the CU-UP that the remote UE is accessing through the relay UE, the CU-CP may additionally configure a timer value for which the CU-UP should buffer DL data. Then, the CU-UP may buffer the corresponding DL data until the timer configured by the CU-CP expires without deleting the DL data even if an indication that the PDCP PDU has been successfully transmitted to the relay UE is received from the DU. The CU-UP may delete the DL data when the timer expires.

Alternatively, the CU-CP may clearly inform the CU-UP that proactive data forwarding is required. In this case, the CU-UP may additionally buffer an arbitrary number of DL data according to implementation of the CU-UP regardless of the 'successfully delivered PDCP SN' received from the DU.

The CU-CP may deliver the information to the CU-UP in addition to the indication informing the CU-UP that the remote UE is accessing through the relay UE.

The operation of Step 2 may be performed in a Bearer Context Modification procedure or a Bearer Context Modification Required procedure instead of the bearer context procedure.

Step 3. The CU-UP may transmit resource and bearer context information allocated for the bearer to the CU-CP.

Step 4. Remaining steps of the Remote UE Initial Access procedure of Clause 8.19.1 of TS 38.401 v17.5.0 may be performed.

The remote UE and the NG-RAN may transmit and receive DL/UL data through the relay UE.

Step 5. When the DU successfully transmits DL data (DL data received from the CU-UP) to the relay UE, the DU may inform the CU-UP of the fact through a DDDS (downlink data delivery status).

The DDDS may include 'Highest successfully delivered NR PDCP Sequence Number' and/or 'Number of successfully delivered out of sequence PDCP Sequence Number range', and the like. 'Highest successfully delivered NR PDCP Sequence Number' may be a highest sequence number of an NR PDCP successfully transmitted. 'Number of successfully delivered out of sequence PDCP Sequence Number range' may be the number of successfully transmitted PDCP sequence ranges.

The DU may transmit DL data for the remote UE (DL data received from the CU-UP) to the relay UE. When the relay UE receives the data, the relay UE may transmit an Ack to the DU. The DU may inform the CU-UP through the DDDS that the DL data packet has been successfully transmitted to the relay UE based on the Ack.

For the aforementioned DDDS, contents for a DL DATA DELIVERY STATUS (PDU Type 1) Format defined in TS 38.425 v17.3.0 may be applied.

Table 3 shows an example of the DDDS.

**[Table 3]**

| Bits | | | | | | | | Number of Octets |
|---|---|---|---|---|---|---|---|---|
| 7 | 6 | 5 | 4 | 3 | 2 | 1 | 0 | |
| PDU Type (=1) | | | | Highest Transmitted NR PDCP SN Ind | Highest Delivered NR PDCP SN Ind | Final Frame Ind. | Lost Packet Report | 1 |
| Sp are | Feedback Delay Ind. | NR -U SN Ind. | Delivered NR PDCP SN Range Ind | Data rate Ind. | Retransmitted NR PDCP SN Ind | Delivered Retransmitted NR PDCP SN Ind | Cause Report | 1 |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6_{*} Number of reported lost ITR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |

| Bits | | | | | | | | Number of |
|---|---|---|---|---|---|---|---|---|
| Number of successfully delivered out of sequence PDCP Sequence Number range | | | | | | | | 0 or 1 |
| Start of successfully delivered out of sequence PDCP Sequence Number range | | | | | | | | 0 or (6_{*} Number of |
| End of successfully delivered out of sequence PDCP Sequence Number range | | | | | | | | successfuly delivered out of sequence PDCP Sequence Number range) |
| NR-U Sequence Number of Polling Frame | | | | | | | | 0 or 3 |
| Feedback Delay Result | | | | | | | | 0 or 4 |
| Padding | | | | | | | | 0-3 |

Regardless of whether the CU-CP informs the CU-UP that the remote UE has accessed through the relay UE in Step 2, the DU may inform the CU-UP through the DDDS in Step 5 that data is being transmitted to the remote UE through the relay UE. Then, the CU-UP may continue to buffer DL data based on information received from the DU in Step 5 even if an indication is not received from the CU-CP in Step 2.

Alternatively, according to DU implementation, the DU may configure values such as 'Highest successfully delivered NR PDCP Sequence Number' and/or 'Number of successfully delivered out of sequence PDCP Sequence Number range' in consideration of proactive data forwarding when generating/determining information included in the DDDS in Step 5.

For example, although the DU has successfully delivered DL data toward the relay UE, the DU may not include PDCP SN information of the DL data in the 'Highest successfully delivered NR PDCP Sequence Number' and/or the 'Number of successfully delivered out of sequence PDCP Sequence Number range' in the DDDS. In this case, the CU-UP may determine that the DL data corresponding to the PDCP SN has not yet been delivered to the remote UE and the CU-UP may continue to buffer the DL data.

However, so that the CU-UP may continue to transmit a certain amount of DL data toward the DU, the DU may configure values such as 'Desired buffer size for the data radio bearer' and/or 'Desired Data Rate' in the DDDS of Step 5 in consideration of proactive data forwarding. 'Desired buffer size for the data radio bearer' may be a desired buffer size for the data radio bearer. 'Desired Data Rate' may be a desired data rate.

Alternatively, the CU-CP may request the DU to perform an operation considering proactive data forwarding through a UE Context Setup or UE Context Modification procedure (for example, an operation not to include PDCP SN information of corresponding DL data in 'Highest successfully delivered NR PDCP Sequence Number' and/or 'Number of successfully delivered out of sequence PDCP Sequence Number range' in the DDDS even though the DL data has been successfully delivered toward the relay UE).

Step 6. Even if the CU-UP receives a PDCP SN successfully transmitted to the relay UE in Step 5 from the DU, the CU-UP may continue to buffer DL data for the PDCP SN without deleting it based on the indication received from the CU-CP in Step 2.

Step 7. Due to movement of the remote UE, the CU-CP of NG-RAN1 may decide to perform handover (Xn-based handover or NG-based handover) for the remote UE to NG-RAN2.

At this time, the CU-CP of NG-RAN1 may perform proactive data forwarding together for DL lossless delivery.

The CU-UP of NG-RAN1 may inform the CU-CP of NG-RAN1 of PDCP SN information successfully transmitted to the relay UE up to the present. Then, the CU-CP of NG-RAN1 may deliver the corresponding information to NG-RAN2 through an SN STATUS TRANSFER message.

In addition, the CU-UP of NG-RAN1 may deliver buffered data to NG-RAN2. At this time, the CU-UP may also deliver DL data that has been continuously buffered even though it was successfully transmitted to the relay UE in Step 6 to NG-RAN2.

NG-RAN2 may receive a 'PDCP Status Report' from the remote UE. Based on this, NG-RAN2 may additionally transmit, to the remote UE, DL data requiring retransmission among the DL data received from NG-RAN1.

According to the disclosure of the present specification, the CU-UP of NG-RAN1 may buffer DL data successfully transmitted by the DU toward the relay UE without deleting it. When the remote UE is later handed over toward NG-RAN2, the CU-UP of NG-RAN1 may additionally deliver the buffered DL data to NG-RAN2. NG-RAN2 may additionally transmit, to the remote UE, DL data requiring retransmission among the DL data received from NG-RAN1 according to the 'PDCP Status Report' sent by the remote UE. Through this method, a situation in which some DL data is lost from a perspective of the remote UE may be avoided.

The drawings may be executed individually, or may be executed together with other drawings.

The following operations may be performed:
- a CU-CP may inform a CU-UP that a remote UE has accessed through a relay UE in a Bearer Context Setup or Bearer Context Modification process for the remote UE.
- the CU-UP may continuously buffer DL data successfully transmitted to the relay UE without deleting it based on information received from the CU-CP and a DU.
- the CU-UP may deliver the continuously buffered DL data to a target NG-RAN in a handover situation for the remote UE.

The following drawings were created to explain specific examples of the present specification. Since the specific names of devices or specific names of signals/messages/fields described in the drawings are presented as examples, the technical features of the present specification are not limited to the specific names used in the following drawings.

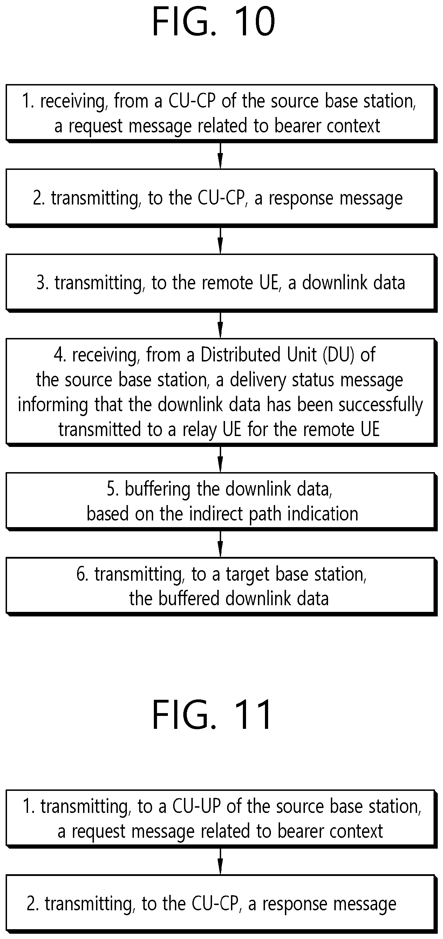

**FIG. 10** **shows the procedure of the CU-UP according to disclosure of the present specification.**
1. The CU-UP may receive, from a Central Unit-Control Plane (CU-CP) of the source base station, a request message related to bearer context.
   The request message may include an indirect path indication.
   The indirect path indication may indicate that a path between a remote User Equipment (UE) and the source base station is an indirect path.
2. The CU-UP may transmit, to the CU-CP, a response message, based on the request message.
3. The CU-UP may transmit, to the remote UE, a downlink data.
4. The CU-UP may receive, from a Distributed Unit (DU) of the source base station, a delivery status message informing that the downlink data has been successfully transmitted to a relay UE for the remote UE.
   The CU-UP may skip discarding of the downlink data based on the delivery status message, based on the indirect path indication.
5. The CU-UP may buffer the downlink data, based on the indirect path indication.
6. The CU-UP may transmit, to a target base station, the buffered downlink data, based on a handover of the remote UE from the source base station to the target base station.

The request message may be a bearer context setup request or a bearer context modification request.

The request message may include a timer.

The CU-UP may start the timer.

The step of buffering may be performed until the timer expires.

The CU-UP may discard the downlink data, based on expiration of the timer.

The response message may include allocated resource and bearer context information.

The delivery status message may be transmitted through a downlink data delivery status (DDDS) frame.

The downlink data may be transmitted to the DU and the relay UE.

The CU-CP may be a logical node constituting the base station hosting a Radio Resource Control (RRC) protocol and a Packet Data Convergence Protocol (PDCP)-C protocol.

The CU-UP may be a logical node constituting the base station hosting a PDCP-U.

The following drawings were created to explain specific examples of the present specification. Since the specific names of devices or specific names of signals/messages/fields described in the drawings are presented as examples, the technical features of the present specification are not limited to the specific names used in the following drawings.

**FIG. 11** **shows the procedure of the CU-CP according to disclosure of the present specification.**
1. The CU-CP may transmit, to a CU-UP of the source base station, a request message related to bearer context.
2. The CU-CP may transmit, to the CU-CP, a response message, based on the request message.

The request message may include an indirect path indication.

The indirect path indication may indicate that a path between a remote UE and the source base station is an indirect path.

The request message may include a timer.

The timer may include time information for which the CU-UP buffers downlink data.

The response message may include allocated resource and bearer context information.

The CU-CP may be a logical node constituting the base station hosting a RRC protocol and a PDCP-C protocol.

The CU-UP may be a logical node constituting the base station hosting a PDCP-U.

Hereinafter, an apparatus for performing communication according to some embodiments of the present specification will be described.

For example, an apparatus may include a processor, a transceiver, and a memory.

For example, a processor may be configured to be operably coupled with a memory and a processor.

The processor may perform: receiving, from a Central Unit-Control Plane (CU-CP) of the source base station, a request message related to bearer context; wherein the request message includes an indirect path indication, wherein the indirect path indication indicates that a path between a remote User Equipment (UE) and the source base station is an indirect path, transmitting, to the CU-CP, a response message, based on the request message; transmitting, to the remote UE, a downlink data; receiving, from a Distributed Unit (DU) of the source base station, a delivery status message informing that the downlink data has been successfully transmitted to a relay UE for the remote UE; skipping discarding of the downlink data based on the delivery status message, based on the indirect path indication; buffering the downlink data, based on the indirect path indication; and transmitting, to a target base station, the buffered downlink data, based on a handover of the remote UE from the source base station to the target base station.

Hereinafter, a processor for providing communication according to some embodiments of the present specification will be described.

The processor is configured to: receiving, from a Central Unit-Control Plane (CU-CP) of the source base station, a request message related to bearer context; wherein the request message includes an indirect path indication, wherein the indirect path indication indicates that a path between a remote User Equipment (UE) and the source base station is an indirect path, transmitting, to the CU-CP, a response message, based on the request message; transmitting, to the remote UE, a downlink data; receiving, from a Distributed Unit (DU) of the source base station, a delivery status message informing that the downlink data has been successfully transmitted to a relay UE for the remote UE; skipping discarding of the downlink data based on the delivery status message, based on the indirect path indication; buffering the downlink data, based on the indirect path indication; and transmitting, to a target base station, the buffered downlink data, based on a handover of the remote UE from the source base station to the target base station.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, from a Central Unit-Control Plane (CU-CP) of the source base station, a request message related to bearer context; wherein the request message includes an indirect path indication, wherein the indirect path indication indicates that a path between a remote User Equipment (UE) and the source base station is an indirect path, transmitting, to the CU-CP, a response message, based on the request message; transmitting, to the remote UE, a downlink data; receiving, from a Distributed Unit (DU) of the source base station, a delivery status message informing that the downlink data has been successfully transmitted to a relay UE for the remote UE; skipping discarding of the downlink data based on the delivery status message, based on the indirect path indication; buffering the downlink data, based on the indirect path indication; and transmitting, to a target base station, the buffered downlink data, based on a handover of the remote UE from the source base station to the target base station.

The present specification may have various effects.

For example, S&F operations related to the connection of feeder links and service links can be performed.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a Central Unit-User Plane (CU-UP) of a source base station, comprising:
receiving, from a Central Unit-Control Plane (CU-CP) of the source base station, a request message related to bearer context;
wherein the request message includes an indirect path indication,
wherein the indirect path indication indicates that a path between a remote User Equipment (UE) and the source base station is an indirect path,
transmitting, to the CU-CP, a response message, based on the request message;
transmitting, to the remote UE, a downlink data;
receiving, from a Distributed Unit (DU) of the source base station, a delivery status message informing that the downlink data has been successfully transmitted to a relay UE for the remote UE;
skipping discarding of the downlink data based on the delivery status message, based on the indirect path indication;
buffering the downlink data, based on the indirect path indication; and
transmitting, to a target base station, the buffered downlink data, based on a handover of the remote UE from the source base station to the target base station.

2. The method of claim 1,
wherein the request message is a bearer context setup request or a bearer context modification request.

3. The method of claim 1 or claim 2, further comprising:
wherein the request message includes a timer,
starting the timer;
wherein the step of buffering is performed until the timer expires; and
discarding the downlink data, based on expiration of the timer.

4. The method of any one of claims 1 to 3,
wherein the response message includes allocated resource and bearer context information.

5. The method of any one of claims 1 to 4,
wherein the delivery status message is transmitted through a downlink data delivery status (DDDS) frame.

6. The method of any one of claims 1 to 5,
wherein the downlink data is transmitted to the DU and the relay UE.

7. The method of any one of claims 1 to 6,
wherein the CU-CP is a logical node constituting the base station hosting a Radio Resource Control (RRC) protocol and a Packet Data Convergence Protocol (PDCP)-C protocol, and
wherein the CU-UP is a logical node constituting the base station hosting a PDCP-U.

8. A method for performing communication, performed by a CU-CP of a source base station, comprising:
transmitting, to a CU-UP of the source base station, a request message related to bearer context; and
transmitting, to the CU-CP, a response message, based on the request message,
wherein the request message includes an indirect path indication,
wherein the indirect path indication indicates that a path between a remote UE and the source base station is an indirect path.

9. The method of claim 8,
wherein the request message includes a timer, and
wherein the timer includes time information for which the CU-UP buffers downlink data.

10. The method of claim 8 or claim 9,
wherein the response message includes allocated resource and bearer context information.

11. The method of any one of claims 8 to 10,
wherein the CU-CP is a logical node constituting the base station hosting a RRC protocol and a PDCP-C protocol, and
wherein the CU-UP is a logical node constituting the base station hosting a PDCP-U.

12. A CU-UP of a source base station to perform communication, comprising:
a transceiver; and
a processor,
wherein the processor performs operations that is a method of one of the claims 1 to 7.

13. A CU-CP of a source base station to perform communication, comprising:
a transceiver; and
a processor,
wherein the processor performs operations that is a method of one of the claims 8 to 11.

14. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 7.

15. A non-volatile computer readable storage medium having recorded instructions,
wherein the instructions, based on being executed by one or more processors, cause the one or more processors to perform operation that is a method of one of the claims 1 to 7.
